# EUROPEAN PATENT SPECIFICATION

(11) **EP 2 193 836 B1**
(45) Date of publication and mention of the grant of the patent: **08.08.2012**
(21) Application number: 09178065.0
(22) Date of filing: 04.12.2009
(51) Int. Cl.: B01F 7/00, B01F 15/00, B01F 15/02, B29B 7/74, B29B 7/76, B29B 7/94, G01F 11/02

(54) **Device for mixing a plastic material with a colouring substance**
Vorrichtung zum Mischen eines Kunststoffmaterials mit einem Farbstoff
Dispositif pour mélanger une matière plastique avec une substance colorante

(30) Priority: 05.12.2008 IT MI20082164
(43) Date of publication of application: 09.06.2010
(73) Proprietor: MAURI & C. S.n.C. di Carlo Mauri e C., 20034 Giussano (IT)
(72) Inventor: Mauri, Carlo, 22066 Mariano Comense (IT)
(74) Representative: Tansini, Elio Fabrizio

(56) References cited:
- EP-A- 0 492 413
- WO-A-01/30488
- WO-A-2007/039378
- JP-A- 57 160 603
- US-A- 3 967 634
- US-A- 4 693 397
- US-A1- 2004 247 887
- US-A1- 2007 000 947

## Description

The present invention relates to a device for mixing a plastic material with a colouring substance.

The invention falls within the sector of moulding and injection plants for plastic materials, and in particular concerns plants provided with a mixer for creating a two-component plastic mixture or blend, of polyurethane for example, and for adding a colouring substance to such a blend.

Production of plastic material by a cross-linking process is known in which a base substance and a reagent suitably mixed with each other are involved.

Also known is a technique of adding a colouring substance to the above described mixture, in order to obtain a plastic material of the desired colour.

Plants for producing coloured plastic mixtures are presently available on the market and they comprise a fixed mixer or a mixer that can be manually set in motion by an operator, which mixer is connected by flexible hoses to respective tanks containing the base substance, the reagent and the colouring substance. Also provided are suitable metering pumps to convey the base substance, reagent and colouring substance, through the respective pipelines, to the mixer.

Inside the mixer the base substance and reagent are intimately mixed with each other and with the colouring substance that is added thereto in the mixer itself.

The mixer is provided with a nozzle for delivery of the mixture thus made, and in particular for releasing the mixture into a mould or a different container suitable for manufacture of a plastic product.

Since it is often necessary to vary the colour of the products thus made, the mixer is required to be connected each time to tanks of colouring substances containing different dyes.

Document WO 2007/039378 relates to a polyurethane mixing device provided with an interchangeable cartridge assembly comprising a dosing piston unit which is actuated by a drive module for pressure-supplying the a coloring substance towards a delivery nozzle. The nozzle is switchable between two operating positions by an hydraulic control. In one operating position of the nozzle the color is sent towards a mixing head. In another operating position of the nozzle the color is sent back to a reservoir.

Disadvantageously, plants of the above described type encounter great difficulties in case of variation of the colouring substance. In fact, during use, many parts of the plant become impregnated with the colouring substance and accurate cleaning operations are required each time. In particular, it is necessary to clean the tube feeding the colouring substance, the respective metering pump and possible valves or other regulating members passed through by the colouring substance.

It is apparent that the cleaning operations carried out on these parts of the plant involve waste of time and high costs.

In addition, when removal of the colouring substance occurs, an even important amount of the substance itself is wasted, which will bring about an economic disadvantage.

Furthermore, during the cleaning and washing operations, the whole plant has to be stopped, thereby involving a reduction in productivity.

Due to the above problems, the production of lots of articles of manufacture in small batches having colours different from each other is economically disadvantageous.

Also undesirable complications arise for managing the replacement and storage of tanks containing the colouring substances in different colours.

Further disadvantages connected with the above described plant are represented by the use of flexible hoses remaining in a suspended position during movement of the mixer and constituting a hindrance for the operator designed to make the mixer work and also a risk for the operator's safety.

In this context, the technical task underlying the present invention is to propose a device for mixing plastic materials with a colouring substance which is able to overcome the above mentioned drawbacks of the known art.

In particular, it is an aim of the present invention to make available a device for mixing a plastic material with a colouring substance which has a high operating flexibility and, in particular, a high simplicity and quickness in changing the colouring substance used.

Another aim of the invention is to propose a device for mixing a plastic material with a colouring substance which is able to rationalise the material consumption and, in particular, to eliminate or greatly reduce the amount of the wasted colouring substance at each operation for changing the colouring substance previously used.

It is a further aim of the present invention to propose a device for mixing a plastic material with a colouring substance that has a high simplicity of use and can be operated by a worker in a safe manner.

The technical task mentioned and the aims specified are substantially achieved by a device for mixing a plastic material with a colouring substance comprising the technical features set out in one or more of the appended claims.

Further features and advantages of the present invention will become more apparent from the description of a preferred but not exclusive embodiment of a device for mixing a plastic material with a colouring substance, given by way of non-limiting example and illustrated in the accompanying drawings, in which:
- Fig. 1 is a side view partly in section of the device of the present invention;
- Fig. 2 is a perspective view of part of the device seen in Fig. 1;
- Fig. 3 is an exploded view of the part of the device shown in Fig. 2.

With reference to the drawings, a device for mixing a plastic material with a colouring substance has been generally identified with reference numeral 1.

Preferably, the device of the invention is used for producing polyurethane to which pigments or other preestablished colouring substances are added.

However, the invention can also apply to different plastic materials, and in particular can concern production of a generic plastic material to which pigments are added.

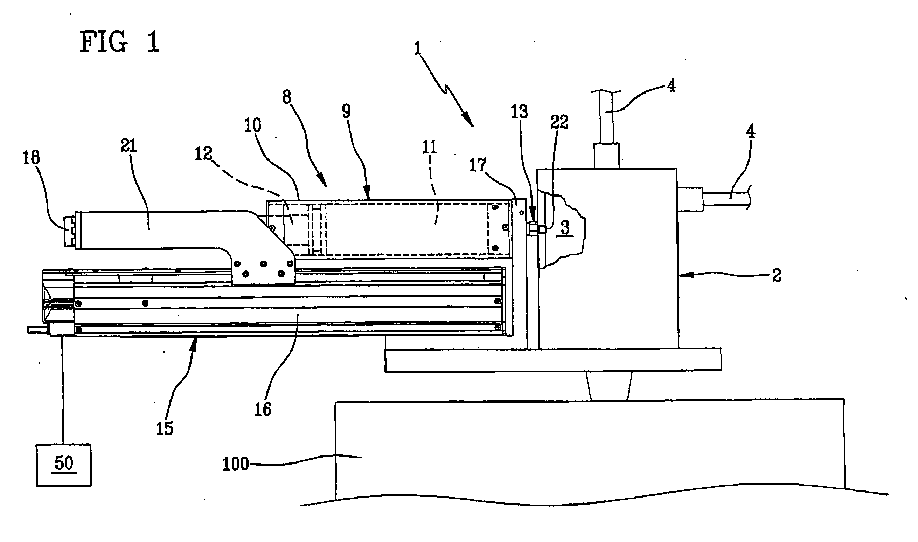

In accordance with the view in Fig. 1, device 1 comprises a holding structure 2 having a mixing chamber 3 inside it. The mixing chamber is connected to first feeding means 4, to supply a first and a second component of the plastic material to be produced. These components are a base component and a reagent respectively, flowing through the mixing chamber 3 to be then introduced into a mould 100, inside which they react with each other by an exothermic reaction promoting cross-linking of the two components so as to obtain the article of manufacture made of plastic material. The mixing chamber 3 is designed to carry out mixing of the two components with each other.

In accordance with a first embodiment, the first feeding means 4 comprises a pair of high-pressure nozzles injecting the two components into the mixing chamber 3. In this case mixing of the two components occurs due to the whirling motion of the two components that are sprayed into the mixing chamber 3.

In accordance with a possible alternative embodiment, the first feeding means 4 comprises a pair of inlet openings through which the base component and the reagent respectively flow. A dynamic mixer, an Archimedean screw or a stirrer for example, can be provided inside the mixing chamber 3 for carrying out mixing of the two components.

Device 1 further comprises second feeding means 8 to supply a colouring substance to the mixing chamber 3. The second feeding means 8 comprises an interchangeable cartridge 9 previously filled with a colouring substance. Preferably, the feeding means 8 comprises a plurality of interchangeable cartridges 9, each being previously filled with a colouring substance of a different colour so that when the colour to be added to the mixture in the mixing chamber 3 has to be changed, replacement of the cartridge 9 in use with a new cartridge 9 corresponding to the different new colour is only required.

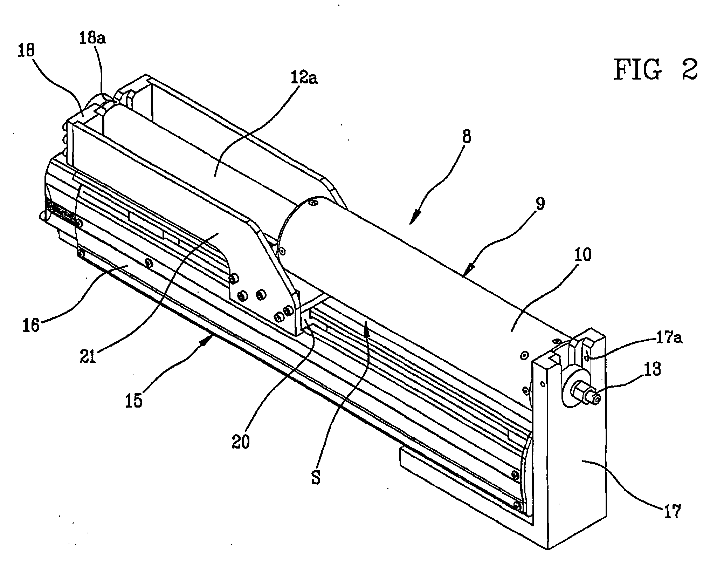

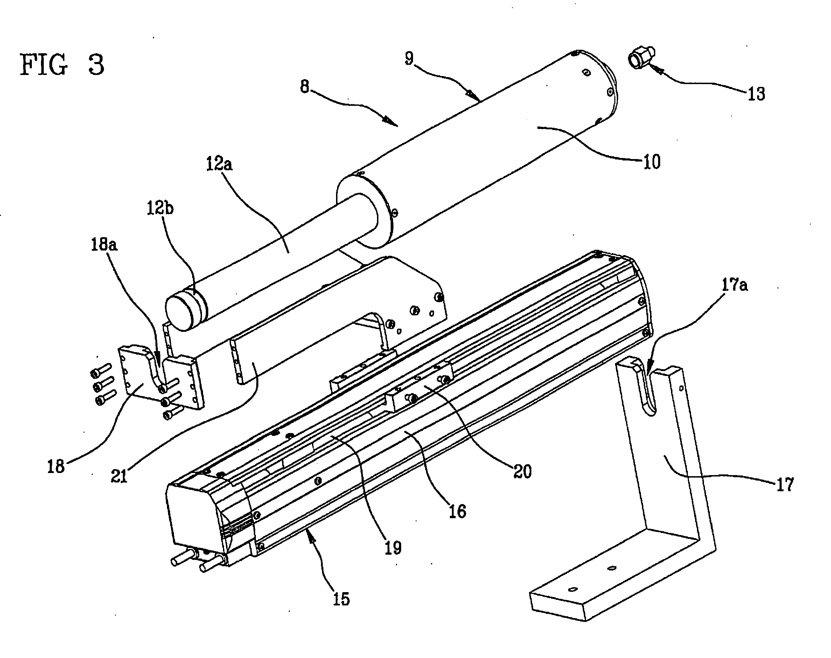

Figs. 2 and 3 show the cartridge 9 in detail and the way of using it in the device 1 according to the invention.

Cartridge 9 comprises a rigid container 10 internally defining a holding volume 11 at least partly filled with the colouring substance, and a piston 12 slidably movable relative to the rigid container 10 through an end thereof. The rigid container 10 is preferably transparent to make the colour of the colouring substance contained therein directly visible.

On the opposite side relative to piston 12, the rigid container 10 is provided with a delivery nozzle 13 through which the colouring substance is ejected being pushed by the forward movement of piston 12.

as clearly shown in the drawings, the delivery nozzle 13 is a rigid body fastened to an end wall of container 10, opposite to the end passed through by piston 12, and projects from said end wall for entering the mixing chamber 3. Piston 12 in particular is movable between a retracted configuration (shown in Fig. 2), corresponding to the condition of a filled cartridge 9, and an extended configuration (not shown) corresponding to the condition of an empty cartridge 9. In fact, piston 12 is slidably and sealingly in engagement with the inner wall of the rigid container 10.

Cartridge 9 further comprises a one-way valve (not shown) applied to the rigid container 10 and disposed at the delivery nozzle 13, preferably inside the latter, to allow the colouring substance to exclusively flow out of the holding volume 11.

Also provided is a linear actuator 15 to be fastened to the holding structure 2 of device 1 and adapted to support and move cartridge 9. The linear actuator 15 comprises a casing 16 and a first and a second supporting element 17, 18 mounted on said casing 16.

The first supporting element 17 is fixed relative to casing 16. In addition, the first supporting element 17 has a first seat 17a for stably housing a portion of the rigid container 10 of cartridge 9. The second supporting element 18 has a second seat 18a defined by a notch for stably housing an end portion of the piston 12 of cartridge 9. Piston 12 comprises a rod 12a with a seat at the free end thereof, in the form of an annular throat 12b to be coupled with the notch 18a formed in the second supporting element 18.

The second supporting element 18 is slidably mounted on casing 16 for carrying out a movement close to and away from the first supporting element 17.

The linear actuator 15 further comprises actuating means 19 mounted on casing 16 and acting between the casing 16 itself and the second supporting element 18 to move the second supporting element 18 close to and away from the first supporting element 17, in such a manner as to carry out movement of piston 12 and therefore delivery of the colouring substance.

In the preferred embodiment, the actuating means 19 comprises an electromechanical assembly such as a kinematic coupling with lead nut and worm screw, for example.

In accordance with a preferred embodiment, the kinematic coupling with lead nut and worm screw, housed in casing 16 and not shown in detail, comprises a nut screw integral with the second supporting element 18 and operatively in engagement with a screw drivable in rotation by a motor mounted on casing 16.

In greater detail, in accordance with the exploded view in Fig. 3, the actuating means 19 drives a slide 20 carried by said nut screw and directly connected to the second supporting element 18 by a connecting bracket 21.

The two supporting elements 17, 18 and in particular said seats 17a, 18a define a steady housing seat "S" for the cartridge 9, adapted to support said cartridge 9 in a predetermined configuration.

In particular, the linear actuator 15 can be fastened to the holding structure 2 in such a configuration that the delivery nozzle directly faces the mixing chamber 3, and is preferably at least partly inserted in the mixing chamber 3 itself. To this aim, the holding structure 2 has a through hole 22 through which the delivery nozzle 13 of cartridge 9 is sealingly engaged (Fig. 1). Preferably, the delivery nozzle 13 has a free end substantially lying flush with the inner wall of the mixing chamber or slightly protruding into the chamber itself. Thus stagnation of possible residues of colouring substance in the through hole 22 is avoided, also following removal of cartridge 9.

Device 1 further comprises a control unit 50 only diagrammatically shown in Fig. 1, which acts on the linear actuator 15 to regulate the amounts of the displacements of piston 12, according to a desired curve of delivery against time.

The control unit 50 can further be designed for regulating delivery of the first and second components to the mixing chamber 3.

The linear actuator 15 and the control unit 50 altogether constitute metering means acting on the feeding means for metering the desired amount of said components and of the colouring substance fed to the mixing chamber 3.

In use, a cartridge 9 containing a colouring substance (generally having a doughy consistency) of the desired colour is mounted on the two supporting elements 17, 18 in such a manner that the outlet of the delivery nozzle 13 directly opens into the mixing chamber 3.

Subsequently, feeding of the two components is activated through said first feeding means 4 and simultaneously delivery of the colouring substance is activated by actuating piston 12. Delivery of the colouring substance follows a time curve determined by the control unit 50 operating the actuating means 19 and, therefore, piston 12.

The colouring substance thus delivered is blended with the components mixed within the mixing chamber 3 and the mixture thus obtained in conveyed to a mould 100 disposed downstream of the mixing chamber 3.

If necessary, the colour of the plastic material produced can be changed by replacing cartridge 9 with a cartridge 9 internally having a colouring substance of different colour.

Under this circumstance, the whole cartridge 9 is removed and therefore also piston 12 together with the rigid container 10 and nozzle 13 provided with the one-way valve, if any.

Advantageously, in addition, since the delivery nozzle 13 directly faces the mixing chamber 3, there are no further elements of the device that are to be submitted to cleaning or washing. The main elements remaining in contact with the colouring substance are in fact replaced and, as a result, the plant's cleaning and washing operations are greatly reduced.

Furthermore, the reduction in the device components in contact with the colouring substance greatly reduces the amount of colouring substance wasted and, therefore the use of the colouring substance itself is rationalised.

Finally, due to application of the cartridge directly to the holding structure of the device, the bothersome flexible hoses can be eliminated, which hoses would be otherwise necessary for connecting the mixing chamber to a tank of the desired substance.

It is apparent that use of the device according to the present invention is particularly advantageous in producing small batches of products with frequent colour changes, because these changes can be made in an immediate manner and without waste of material also after a small number of units have been moulded. In these plants, in fact, the time reduction for colour changes (together with simplified operations for cleaning and washing) allows a great reduction in the stoppage times of the plant and consequently a high increase in productivity.

## Claims

1. A device for mixing a plastic material with a colouring substance, comprising:
- a holding structure (2) having a mixing chamber (3);
- first feeding means (4) to supply a first and a second component of said plastic material, said first feeding means (4) being connected to said mixing chamber (3) for conveying a discharge of said first and second components to the mixing chamber (3);
- second feeding means (8) to supply a colouring substance, connected to the mixing chamber (3) for conveying a discharge of said colouring substance to the mixing chamber (3);
- a linear actuator (15) and a control unit (50) altogether constituting a metering means acting on the feeding means (4, 8) for metering the amount of said components and said colouring substance fed to the mixing chamber (3); wherein said second feeding means (8) comprises at least one interchangeable cartridge (9) having a holding volume (11) at least partly filled with a colouring substance and provided with a delivery nozzle (13) connectable to said mixing chamber (3), wherein said cartridge (9) has a container (10) internally defining said holding volume (11), said cartridge (9) having thrust means (12) acting on the holding volume (11) to cause an outflow of said colouring substance through said delivery nozzle (13); said thrust means comprising a piston (12) acting on the holding volume (11), **characterised in that** said metering means being directly active on said thrust means (12) to meter the amount of colouring substance dispensed through said delivery nozzle (13), wherein said piston (12) is slidably and sealingly in engagement with an inner wall of the container (10), and said delivery nozzle (13) projects from an end wall of the container (10) opposite to said piston (12) for entering the mixing chamber (3).

2. A device as claimed in claim 1, **characterised in that** said cartridge (9) comprises a one-way valve, disposed at said delivery nozzle (13) to allow a flow of said colouring substance alone to come out of said holding volume (11).

3. A device as claimed in one or more of the preceding claims, **characterised in that** it comprises a seat (S) for steadily housing said cartridge (9), said housing seat (S) being such disposed that the delivery nozzle (13) of the cartridge (9) is maintained in a position directly facing said mixing chamber (3).

4. A device as claimed in claim 3, **characterised in that** said metering means comprises the linear actuator (15) acting on said piston (12) to move it according to displacements of a predetermined amount, between a retracted configuration corresponding to a condition at which the cartridge (9) is completely filled, and an extended configuration corresponding to a condition at which the cartridge (9) is empty.

5. A device as claimed in claim 4, **characterised in that** said linear actuator (15) comprises:
- a casing (16) to be directly fastened to said holding structure (2) and having a first element (17) supporting said cartridge (9) and a second element (18) supporting said cartridge (9), which second supporting element (18) can further be integrally engaged with said thrust means (12); and
- actuating means (19) mounted on the casing (16) and acting between said casing (16) and the second supporting element (18) to move the second supporting element (18) close to and away from the first supporting element (17), in such a manner as to carry out movement of the thrust means (12).

6. A device as claimed in claim 5, **characterised in that** said cartridge (9) has a container (10) internally defining said holding volume (11), said first supporting element (17) having a first seat (17a) for steadily housing a portion of said container (10), said second supporting element (18) having a second seat (18a) for steadily housing an end portion of said piston (12).

7. A device as claimed in claim 5 or 6, **characterised in that** said actuating means (19) comprises a nut screw carried by the second supporting element (18) and operatively in engagement with a screw drivable in rotation by a motor.

8. A device as claimed in one or more of claims 4 to 7, **characterised in that** said metering means further comprises a programmable control unit (50) acting on said linear actuator (15) to govern the amounts of displacement of said piston (12).

9. A device as claimed in one or more of claims 3 to 8, wherein the delivery nozzle (13) is at least partly inserted in the mixing chamber (3).

10. A device as claimed in one or more of claims 3 to 9, wherein the holding structure (2) has a through hole (22) through which the delivery nozzle (13) of the cartridge (9) is sealingly engaged.

11. A device as claimed in one or more of claims 5 to 10, wherein the piston (12) comprises a rod (12a) with a seat at its free end which is in the form of an annular throat (12b) suitable for coupling with a notch (18a) formed in the second supporting element (18).

12. Use of a device (1) for mixing a plastic material with a colouring substance in accordance with one or more of the preceding claims in a moulding plant for plastic materials, comprising at least one mould (100), said device (1) being operatively associated with the mould (100) for feeding an amount of a mixture of said components and said colouring substance from said mixing chamber (3) to said mould (100).

## Patentansprüche

1. Vorrichtung zum Mischen eines Kunststoffmaterials mit einem Farbstoff, umfassend:
- eine Fassungskonstruktion (2), aufweisend eine Mischkammer (3);
- erste Zuführmittel (4) für die Zuführung einer ersten und einer zweiten Komponente des Kunststoffmaterials, wobei diese Zuführmittel (4) mit der Mischkammer (3) verbunden sind, um eine Abgabe der ersten und zweiten Komponente in die Mischkammer (3) zu fördern;
- zweite Zuführmittel (8) für die Zuführung eines Farbstoffs, verbunden mit der Mischkammer (3), zum Fördern einer Abgabe des Farbstoffs in die Mischkammer (3);
- einen Linearantrieb (15) und eine Steuerung (50), die zusammen Messmittel bilden, die auf die Zuführmittel (4, 8) wirken, um die Menge der Komponenten und des Farbstoffs zu messen, die in die Mischkammer (3) eingeleitet werden;
wobei die zweiten Zuführmittel (8) mindestens eine austauschbare Kartusche (9) mit einem Fassungsvolumen (11) umfassen, das zumindest teilweise mit einem Farbstoff gefüllt und mit einer Abgabedüse (13) ausgestattet ist, verbindbar mit der Mischkammer (3), wobei diese Kartusche (9) einen Behälter (10) besitzt, der intern das Fassungsvolumen (11) definiert und wobei die Kartusche (9) Druckmittel (12) aufweist, die auf das Fassungsvolumen (11) wirken, um das Ausströmen des Farbstoffs durch die Abgabedüse (13) zu verursachen; wobei die Druckmittel einen Kolben (12) umfassen, der auf das Fassungsvolumen (11) wirkt, **dadurch gekennzeichnet, dass** die Messmittel unmittelbar auf die Druckmittel (12) wirken, um die Menge an Farbstoff zu messen, die über die Abgabedüse (13) abgegeben wird, wobei der Kolben (12) verschiebbar und abdichtend mit einer inneren Wand des Behälters (10) im Eingriff steht und die Abgabedüse (13) aus einer Endwand des Behälters (10) hervorspringt, entgegengesetzt zum Kolben (12), um in die Mischkammer (3) einzutreten.

2. Vorrichtung nach Anspruch 1, **dadurch gekennzeichnet, dass** die Kartusche (9) ein Einwegventil umfasst, das an der Abgabedüse (13) angeordnet ist, um zu erlauben, dass allein der Farbstoff aus dem Fassungsvolumen (11) ausströmt.

3. Vorrichtung nach einem oder mehreren der vorhergehenden Ansprüche, **dadurch gekennzeichnet, dass** sie einen Sitz (S) für die stetige Aufnahme der Kartusche (9) umfasst, wobei dieser Aufnahmesitz (S) so angeordnet ist, dass die Abgabedüse (13) der Kartusche (9) in einer Position direkt gegenüber der Mischkammer (3) beibehalten wird.

4. Vorrichtung nach Anspruch 3, **dadurch gekennzeichnet, dass** die genannte Messmittel den Linearantrieb (15) umfassen, der auf den Kolben (12) wirkt, um diesen gemäß Verschiebungen um eine gewisse Menge zwischen einer eingefahrenen Konfiguration entsprechend einem Zustand, in dem die Kartusche (9) komplett gefüllt ist, und einer ausgefahrenen Konfiguration entsprechend einem Zustand, in dem die Kartusche (9) leer ist, zu bewegen.

5. Vorrichtung nach Anspruch 4, **dadurch gekennzeichnet, dass** der Linearantrieb (15) Folgendes umfasst:
- ein Gehäuse (16), das direkt an der Fassungskonstruktion (2) befestigt wird und ein erstes Element (17) aufweist, das die Kartusche (9) trägt, sowie ein zweites Element (18), das die Kartusche (9) trägt, wobei das zweite Trageelement (18) zudem vollständig mit den Druckmitteln (12) in Eingriff gelangen kann, und
- Antriebsmittel (19), montiert am Gehäuse (16) und wirkend zwischen dem Gehäuse (16) und dem zweiten Trageelement (18), um das zweite Trageelement (18) an das erste Trageelement (17) anzunähern und von diesem zu entfernen, sodass eine Bewegung der Druckmittel (12) ausgeführt wird.

6. Vorrichtung nach Anspruch 5, **dadurch gekennzeichnet, dass** die Kartusche (9) einen Behälter (10) aufweist, der intern das Fassungsvolumen (11) definiert, wobei das erste Trageelement (17) einen ersten Sitz (17a) aufweist, um stetig einen Abschnitt des Behälters (10) aufzunehmen, und das zweite Trageelement (18) einen zweiten Sitz (18a) aufweist, um stetig einen Endabschnitt des Kolbens (12) aufzunehmen.

7. Vorrichtung nach Anspruch 5 oder 6, **dadurch gekennzeichnet, dass** die Antriebsmittel (19) eine Schraubenmutter umfassen, die vom zweiten Trageelement (18) getragen wird und betriebswirksam mit einer Schraube im Eingriff steht, die über einen Motor angetrieben werden kann.

8. Vorrichtung nach einem oder mehreren der Ansprüche 4 bis 7, **dadurch gekennzeichnet, dass** die genannten Messmittel zudem eine programmierbare Steuerung (50) aufweisen, die auf den Linearantrieb (15) wirkt, um die Menge an Verschiebungen des Kolbens (12) zu steuern.

9. Vorrichtung nach einem oder mehreren der Ansprüche 3 bis 8, wobei die Abgabedüse (13) mindestens teilweise in die Mischkammer (3) eingesetzt ist.

10. Vorrichtung nach einem oder mehreren der Ansprüche 3 bis 9, wobei die Fassungskonstruktion (2) eine Durchführung (22) aufweist, durch die die Abgabedüse (13) der Kartusche (9) abdichtend eingreift.

11. Vorrichtung nach einem oder mehreren der Ansprüche 5 bis 10, wobei der Kolben (12) eine Stange (12a) mit einem Sitz an ihrem freien Ende besitzt, der die Form einer ringförmigen Drossel (12b) aufweist, geeignet für die Kupplung mit einer Aussparung (18a), die im zweiten Trageelement (18) ausgebildet ist.

12. Verwendung einer Vorrichtung (1) zum Mischen eines Kunststoffmaterials mit einem Farbstoff nach einem oder mehreren der vorhergehenden Ansprüche in einer Anlage zum Umformen von Kunststoffmaterialien, umfassend mindestens eine Form (100), wobei die Vorrichtung (1) betriebswirksam mit der Form (100) verbunden ist, um eine Menge einer Mischung der Komponenten und des Farbstoffs aus der Mischkammer (3) in die Form (100) einzuleiten.

## Revendications

1. Dispositif pour mélanger une matière plastique avec une substance colorante, comprenant :
- une structure de confinement (2) présentant une chambre de mélange (3) ;
- un premier moyen d'alimentation (4) pour fournir un premier et un deuxième composant de ladite matière plastique, ledit premier moyen d'alimentation (4) étant relié à ladite chambre de mélange (3) pour transporter une évacuation desdits premier et deuxième composant vers la chambre de mélange (3) ;
- un deuxième moyen d'alimentation (8) pour fournir une substance colorante, relié à la chambre de mélange (3) pour transporter une évacuation de ladite substance colorante vers la chambre de mélange (3) ;
- un actionneur linéaire (15) et une unité de commande (50) constituant dans l'ensemble un moyen de dosage agissant sur les moyens d'alimentation (4, 8) pour doser la quantité desdits composants et ladite substance colorante transportée vers la chambre de mélange (3) ;
dans lequel ledit deuxième moyen d'alimentation (8) comprend au moins une cartouche interchangeable (9) présentant un volume de confinement (11) au moins partiellement rempli d'une substance colorante et muni d'une buse de distribution (13) pouvant être reliée à ladite chambre de mélange (3), dans laquelle ladite cartouche (9) présente un récipient (10) définissant à l'intérieur ledit volume de confinement (11), ladite cartouche (9) présentant un moyen de poussée (12) agissant sur le volume de confinement (11) pour permettre une sortie de ladite substance colorante à travers ladite buse de distribution (13) ; ledit moyen de poussée comprenant un piston (12) agissant sur le volume de confinement (11), **caractérisé en ce que** ledit moyen de dosage agit directement sur le moyen de poussée (12) pour doser la quantité de substance colorante distribuée à travers ladite buse de distribution (13), dans laquelle ledit piston (12) est en prise de façon coulissante et hermétique avec une paroi interne du récipient (10), et ladite buse de distribution (13) dépasse d'une paroi terminale du récipient (10) en face dudit piston (12) pour pénétrer dans la chambre de mélange (3).

2. Dispositif selon la revendication 1, **caractérisé en ce que** ladite cartouche (9) comprend une vanne unidirectionnelle, positionnée au niveau de ladite buse de distribution (13) pour permettre un flux de ladite substance colorante uniquement de sortir dudit volume de confinement (11).

3. Dispositif selon une ou plusieurs des revendications précédentes, **caractérisé en ce qu'**il comprend un siège (S) pour loger constamment ladite cartouche (9), ledit siège de logement (S) étant positionné de manière à ce que la buse de distribution (13) de la cartouche (9) soit maintenue dans une position faisant directement face à ladite chambre de mélange (3).

4. Dispositif selon la revendication 3, **caractérisé en ce que** ledit moyen de dosage comprend l'actionneur linéaire (15) agissant sur ledit piston (12) pour l'actionner selon des déplacements d'une quantité prédéterminée, entre une configuration rétractée correspondant à une condition dans laquelle la cartouche (9) est complètement remplie, et une configuration étendue correspondant à une condition dans laquelle la cartouche (9) est vide.

5. Dispositif selon la revendication 4, **caractérisé en ce que** ledit actionneur linéaire (15), comprend :
- un boîtier (16) à attacher directement à ladite structure de confinement (2) et présentant un premier élément (17) soutenant ladite cartouche (9) et un deuxième élément (18) supportant ladite cartouche (9), le deuxième élément de support (18) pouvant également être entièrement en prise avec le moyen de poussée (12) ; et
- un moyen d'actionnement (19) monté sur le boîtier (16) et agissant entre ledit boîtier (16) et le deuxième élément de support (18) pour déplacer le deuxième élément de support (18) à proximité ou loin du premier élément de support (17), de manière à effectuer un mouvement du moyen de poussée (12).

6. Dispositif selon la revendication 5, **caractérisé en ce que** ladite cartouche (9) présente un récipient (10) définissant à l'intérieur ledit volume de confinement (11), ledit premier élément de support (17) présentant un premier siège (17a) pour loger constamment une partie dudit boîtier (10), ledit deuxième élément de support (18) présentant un deuxième siège (18a) pour loger constamment une partie terminale dudit piston (12).

7. Dispositif selon la revendication 5 ou 6, **caractérisé en ce que** le moyen d'actionnement (19) comprend une vis-écrou portée par le deuxième élément de support (18) et en prise de façon opérationnelle avec une vis pouvant être entraînée en rotation par un moteur.

8. Dispositif selon une ou plusieurs des revendications 4 à 7, **caractérisé en ce que** ledit moyen de dosage comprend également une unité de commande programmable (50) agissant sur ledit actionneur linéaire (15) pour commander les quantités de déplacement dudit piston (12).

9. Dispositif selon une ou plusieurs des revendications 3 à 8, dans lequel la buse de distribution (13) est au moins partiellement insérée dans la chambre de mélange (3).

10. Dispositif selon une ou plusieurs des revendications 3 à 9, dans lequel la structure de confinement (2) présente un trou de passage (22) à travers lequel la buse de distribution (13) de la cartouche (9) est engagée de façon hermétique.

11. Dispositif selon une ou plusieurs des revendications 5 à 10, dans lequel le piston (12) comprend une tige (12a) avec un siège à son extrémité libre ayant la forme d'une gorge annulaire (12b) pouvant s'accoupler à une encoche (18a) réalisée dans le deuxième élément de support (18).

12. Utilisation d'un dispositif (1) pour mélanger une matière plastique avec une substance colorante selon une ou plusieurs des revendications précédentes sur une installation de moulage pour matières plastiques, comprenant au moins un moule (100), ledit dispositif (1) étant associé de façon opérationnelle à un moule (100) pour transporter une quantité d'un mélange desdits composants et de ladite substance colorante de ladite chambre de mélange (3) audit moule (100).
